# EUROPEAN PATENT SPECIFICATION

(11) **EP 2 314 632 B1**
(45) Date of publication and mention of the grant of the patent: **23.01.2013**
(21) Application number: 10193919.7
(22) Date of filing: 22.03.2005
(51) Int. Cl.: C07H 3/06, C08B 37/00, C12Q 1/527

(54) **Oligosaccharidic compounds derived from heparin**
Aus Heparin abgeleitete Oligosaccharide
Oligosaccharides dérivés de l'héparine

(30) Priority: 24.03.2004 EP 04290791
(43) Date of publication of application: 27.04.2011
(62) Divisional of application: 05716563.1
(73) Proprietor: Aventis Pharma S.A., 92160 Antony (FR)
(72) Inventor: Mourier, Pierre, 75013, Paris (FR); Viskov, Christian, 75013, Paris (FR)
(74) Representative: Jacobson, Claude

(56) References cited:
- GB-A- 766 992
- US-A- 3 135 660
- US-A- 3 174 904
- US-A- 4 496 550
- HIROMI TSUDA ETA L.: "Substrate specificity studies of Flavobacterium", EUR. J. BIOCHEM., vol. 262, 1999, pages 127-133, XP002294575,

## Description

It is herein described a process for oxidizing crude heparin preparations using at least one permanganate salt chosen from potassium permanganate, sodium permanganate, and quaternary ammonium permanganate. The resulting heparin preparations are relatively free of glycoserine residues and are useful, for example, for preparing low molecular weight heparins (LMWHs) and ultra-low molecular weight heparins (ULMWHs) that are relatively free of glycoserine residues. It is also herein described a method for detecting the presence of glycoserine and glycoserine derivatives in preparations of heparin and of fragmented heparin.

Heparins are biologically active members of the glycosaminoglycan family and can be extracted from, e.g., bovine and porcine sources. Heparins have anticoagulant and antithrombotic properties that make them useful in treatment of thromboses, such as arterial and venous thromboses. As isolated, natural heparin molecules have a high anticoagulant activity, which can lead to hemorrhaging. Moreover, heparin molecules are sensitive to particular serum factors and, consequently, must be administered in large doses to provide antithrombotic benefits greatly increasing the risk of hemorrhaging.

LMWH fragments may be prepared by various processes from heparin: fractionation by means of solvents (FR 2,440,376, U.S. Pat. No. 4,692,435); fractionation on an anionic resin (FR 2,453,875); gel filtration (Barrowcliffe, Thromb. Res. 12, 27-36 (1977)); affinity chromatography (U.S. Pat. No. 4,401,758); controlled depolymerization by means of a chemical agent including, but not limited to, nitrous acid (EP 14184, EP 37319, EP 76279, EP 623629, FR 2,503,714, U.S. Pat. No. 4,804,652; WO 813276), beta-elimination from a heparin ester (EP 40144, U.S. Pat. No. 5,389,618), periodate (EP 287477), sodium borohydride (EP 347588, EP 380943), ascorbic acid (U.S. Pat. No. 4,533,549), hydrogen peroxide (U.S. Pat. No. 4,629,699, U.S. Pat. No. 4,791,195), quaternary ammonium hydroxide from a quaternary ammonium salt of heparin (U.S. Pat. No. 4,981,955), alkali metal hydroxide (EP 380943, EP 347588), by an enzymatic route (EP 64452, U.S. Pat. No. 4,396,762, EP 244235, EP 244236; U.S. Pat. No. 4,826,827; U.S. Pat. No. 3,766,167), or by means of irradiation (EP 269981). See also U.S. Patent No. 4,303,651 and U.S. Patent No. 4,757,057. The resultant LMWH mixtures are reported to demonstrate higher antithrombotic activity, due to high anti-factor Xa (aXa) activity, and a lower anti-factor IIa (alla) activity, than unfractionated heparin, and are often more desirable mixtures for administration to a patient in need of treatment for thromboses.

Each LMWH manufacturer of an approved product utilizes a distinct process of depolymerization. Unless two manufacturers use the same process, this process distinctness results in LMWHs with distinct chemical structures and, therefore, differing pharmacological activity and different approved indications for clinical use.

Therefore, LMWHs are structurally differentiated by the depolymerization processes used for their manufacture (R.J. Linhardt, et al, Seminars in Thombosis and Hemostatis 1999; 25(3 Supp.): 5-16). As a result, LMWHs are more heterogeneous than heparin. Each different process causes unique and highly complex structural modifications to the polysaccharide chains. These modifications include differences in chain lengths and chain sequences, as well as structural fingerprints. Consequently, the different commercial LMWHs each have distinctive pharmacological profiles and different approved clinical indications.

During the process for preparing enoxaparin sodium, sold under the tradename Lovenox^{®} in the US and Clexane^{®} in some other countries, from pure heparin, the aqueous-phase alkaline depolymerization process produces a partial but characteristic conversion of the glucosamines of the reducing ends of the oligosaccharide chains.

The first step of this conversion consists of a glucosamine ↔ mannosamine epimerization (T. Toida, et al., J. Carbohydrate Chemistry, 15(3), 351-360 (1996)); the second step is a 6-O-desulfation of the glucosamine, leading to the formation of derivatives called "1,6 anhydro" (International patent application WO 01/29055).

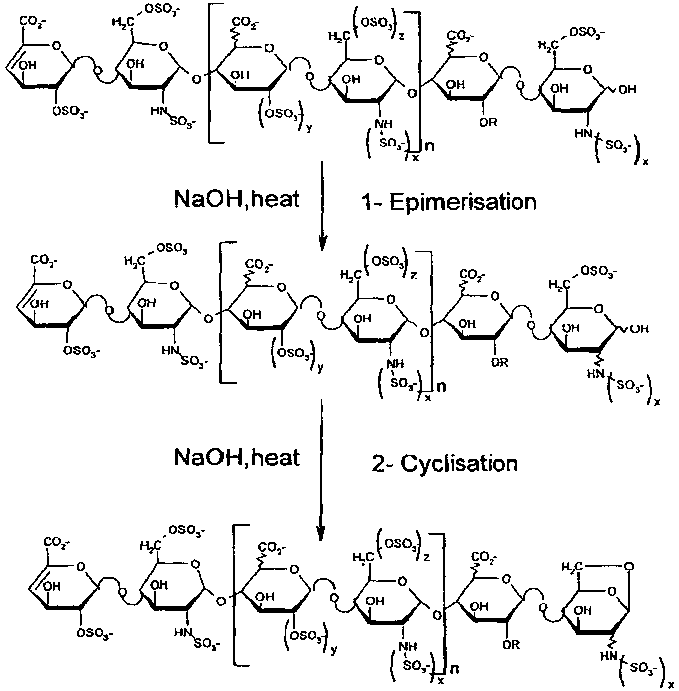

This type of derivative is obtained for oligosaccharide chains whose terminal glucosamine is 6-O-sulfated.

The percentage of oligosaccharide chains whose end is modified with a 1,6-anhydro bond is a structural characteristic of the oligosaccharide mixture of Lovenox^{®} enoxaparin sodium. Based on current knowledge, between 15% and 25% of the components of Lovenox^{®} (enoxaparin sodium) have a 1,6-anhydro structure at the reducing end of their chain.

Recently, new processes for the preparation of heparin fragments employing depolymerization in the presence of a strong base have yielded ultra-low molecular weight heparins having a weight average molecular weight ranging from approximately 1500 to approximately 3000 Daltons (ULMWHs) as described, e.g., in U.S. Published Patent Application No. 2002- 0055621 A1, specifically incorporated by reference herein.

Compositions of LMWH and ULMWH fragments are heterogeneous and contain individual heparin fragments of varying lengths and molecular weights.

Both heparin itself and heparin fragment mixtures have limited shelf lives, at least in part, because they become colored during storage. Once they develop a color, those compositions may not be commercially desirable for injection into patients. A process that yields heparin that resists coloration is therefore highly desirable for commercial reasons. Such coloration-resistant heparin can, of course, be used to prepare coloration-resistant LMWHs and/or ULMWHs by methods known to those skilled in the art. Moreover, a method for assessing the potential of heparin preparations to colorize would be useful in the manufacture of heparin, LMWH, and ULMWH.

US 3,135,660 describes a process of purifying sulfated carbohydrates with oxidizing agents. US 3,174,904 describes a process of decolorizing sulfated carbohydrates and GB 766 992 relates to a process of preparation of decolorized heparin.

A process for preparing heparin that is resistant to coloration is herein described. The resulting heparin may subsequently be employed to produce LMWH and ULMWH mixtures, particularly commercially available mixtures, such as fraxiparin, fragmin, innohep (or logiparin), normiflo, embollex (or sandoparin), fluxum (or minidalton), clivarine, and hibor, that are resistant to coloration. Enoxaparin, sold commercially as Lovenox^{®} (enoxaparin sodium) in the US and Clexane^{®} (enoxaparin sodium) in some other countries may be utilized. Enoxaparin is commercially available from Aventis Pharma S.A. and Aventis Pharmaceuticals, Inc. A method for monitoring the tendency of heparin and mixtures of heparin fragments to color is also described.

A process for preparing heparin is described, which uses at least one permanganate salt chosen from potassium permanganate, sodium permanganate, and quaternary ammonium permanganate, such as potassium permanganate, in a heparin oxidation process to produce glycoserine-free heparinic compositions. That process is described below. It is described herein that if at least one of those permanganates salts, such as potassium permanganate, is utilized in the oxidation step, glycoserine-free or low glycoserine heparin may be obtained. It was also described that removing the glycoserine residues and/or glycoserine derivatives from heparin can lead to products with improved commercial characteristics. Those reduced-glycoserine products are colorless or nearly colorless and show a decreased tendency to colorize relative to products made with heparin that has not been oxidized in the presence of potassium permanganate. Additionally, a method for detecting glycoserine residues (or the lack thereof) in heparin compositions is also described. This method includes pre-treatment of the heparin with one or more heparinases and detection of the acetylated groups using chromatography. Further detailed descriptions are provided below.

Conditions are provided that permit the chemoselective elimination of glycoserine residues and glycoserine derivatives, such as oxidized glycoserines, from heparin.

It is described that at least one permanganate salt chosen from potassium permanganate, sodium permanganate, and quaternary ammonium permanganate, such as potassium permanganate is used in a heparin oxidation process comprising oxidation with about 4% to about 10% by weight relative to the heparin of said at least one permanganate salt so as to obtain a low glycoserine or glycoserine-free heparin. If the resulting low glycoserine or glycoserine-free heparin is depolymerized using methods known in the art, low glycoserine or glycoserine-free LMWHs or ULMWHs such as, fraxiparin, fragmin, innohep (or logiparin), normiflo, embollex (or sandoparin), fluxum (or minidalton), clivarine, and hibor may be obtained, but not enoxaparin sodium. Commercial processes, however, for manufacturing those commercial products are believed to contain proprietary details that, at least in the case of enoxaparin, can affect the biological properties of the final product, as explained in February 19, 2003, Citizen Petition and Citizen Petition Supplement (03P-0064/CP1) filed on behalf of Aventis Pharmaceuticals Inc., a subsidiary of Aventis SA, the assignee and publicly available from the United States Food and Drug Administration (USFDA).

The description also relates to a process for preparing at least one decolorized heparin product chosen from fraxiparin, fragmin, innohep (logiparin), normiflo, embollex (sandoparin), fluxum (minidalton), clivarine, and hibor from heparin comprising:
a) purification of the heparin by oxidation with about 4% to about 10% by weight relative to the heparin of at least one permanganate salt chosen from potassium permanganate, sodium permanganate, and quaternary ammonium permanganate, wherein oxidation occurs at a temperature ranging from approximately 35°C to approximately 90°C; and
b) depolymerization by a manufacturer of the oxidized heparin according to a process to obtain said heparin product.

Alternatively, the manufacturer can depolymerize heparin oxidized with about 4% to about 10% by weight relative to the heparin of at least one permanganate salt chosen from potassium permanganate, sodium permanganate, and quaternary ammonium permanganate, wherein oxidation occurs at a temperature ranging from approximately 35°C to approximately 90°C according to a process to obtain said heparin product

In general, and not necessarily with respect to commercial processes, suitable methods for depolymerization are disclosed, for example, in FR 2,440,376, U.S. Pat. No. 4,692,435, FR 2,453,875, Barrowcliffe, Thromb. Res. 12, 27-36 (1977), U.S. Pat. No. 4,401,758, EP 14184, EP 37319, EP 76279, EP 623629, FR 2,503,714, U.S. Pat. No. 4,804,652, WO 813276, EP 40144, U.S. Pat. No. 5,389,618, EP 287477, EP 347588, EP 380943, U.S. Pat. No. 4,533,549, U.S. Pat. No. 4,629,699, U.S. Pat. No. 4,791,195, U.S. Pat. No. 4,981,955, EP 380943, EP 347588, EP 64452, U.S. Pat. No. 4,396,762, EP 244235, EP 244236, U.S. Pat. No. 4,826,827, U.S. Pat. No. 3,766,167, EP 269981, U.S. Patent No. 4,303,651, U.S. Patent No. 4,757,057, and U.S. Published Patent Application No. 2002- 0055621 A1, all of which are incorporated herein for their disclosure of such methods, except that U.S. Pat. No. 5,389,618 is incorporated only as presently amended in the concurrent reissue proceeding.

The use of at least one of the permanganate salt, such as potassium permanganate, is also described in the heparin oxidation process described above, i.e., oxidation with about 4% to about 10% by weight relative of said to the heparin of said at least one of the permanganate salts to obtain a heparin that is decolorized. If the resulting decolorized heparin is depolymerized, decolorized heparin products including LMWHs or ULMWHs such as fraxiparin, fragmin, innohep (or togiparin), normiflo, embollex (or sandoparin), fluxum (or minidalton), clivarine, and hibor might be obtained, subject to the comment on commercial processes made above.

The use of potassium permanganate in the heparin oxidation process, described above to obtain a heparin that is low glycoserine or glycoserine-free and decolorized is also described herein. If the resulting low glycoserine or glycoserine-free and decolorized heparin is depolymerized, decolorized heparin products including LMWHs or ULMWHs such as fraxiparin, fragmin, innohep (or logiparin), normiflo, embollex (or sandoparin), fluxum (or minidalton), clivarine, and hibor might be obtained, as explained above.

In the description, the phrase "heparin" means all forms of heparin other than a heparin product, including without limitation crude heparin, upgraded heparin and purified heparin.

In the description, the phrase "upgraded heparin" means heparin having an increased anti Xa activity compared to the starting heparin prior to upgrading. For example, and without limitation, if the anti Xa activity of the starting heparin is 140 IU/mg, the upgraded heparin may have an anti Xa activity of 1501U/mg or 200 IU/mg.

In the description, the phrase "low molecular weight heparin" or "LMWH" means a mixture of polysaccharides obtained from heparin and having a weight average molecular weight greater than approximately 3,000 Daltons and less than approximately 10,000 Daltons..

In the description, the phrase "ultra-low molecular weight heparin" or "ULMWH" means a mixture of polysaccharids obtained from heparin having a weight average molecular weight ranging from approximately 1500 to approximately 3000 Daltons.

In the description, the phrase "depolymerization" (and variations thereof such as depolymerize or depolymerizing) includes all types of depolymerization, including without limitation fragmentation, chemical and enzymatic depolymerization, and other methods of preparing fragments of heparin, including without limitation fractionation.

In the description, the phrase "low glycoserine" means a glycoserine (such as, for example, as illustrated below at paragraph 59) percent less than or equal to 0.3% of all disaccharide residues in the sample have a glycoserine attached.

In the description, the phrase "glycoserine-free" means a glycoserine (such as, for example, as illustrated below at paragraph 59) percent less than or equal to 0.1 % of all disaccharide residues in the sample have a glycoserine attached.

In the description, the phrase "relatively glycoserine-free" means a glycoserine (such as, for example, as illustrated below at paragraph 59) percent less than or equal to 0.3 % of all disaccharide residues in the sample have a glycoserine attached.

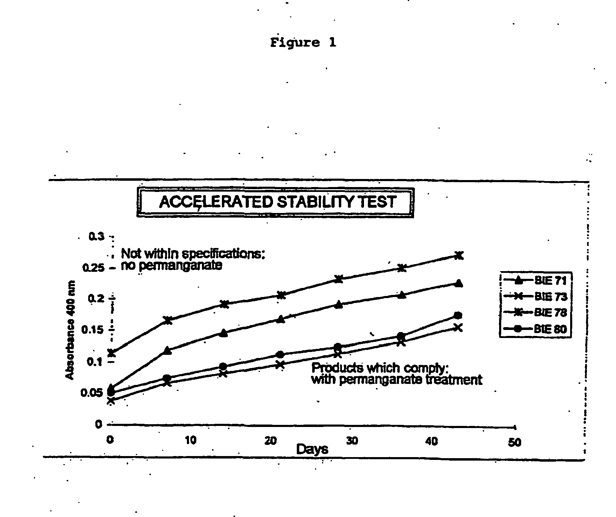

In the description, the phrase "decolorized" means less than or equal to 0.2 absorbance units in an accelerated stability test such as that described below under the heading "Preparation for colorimetric analysis of the sample." Figure 1 reflects the results of an accelerated stability test for enoxaparin sodium.

In the description, the phrase "coloration" means greater than 0.2 absorbance units in an accelerated stability test such as that described below under the heading "Preparation for colorimetric analysis of the sample." Figure 1 reflects the results of an accelerated stability test for enoxaparin sodium.

In the description, the phrase "coloration-resistant" means less than or equal to 0.2 absorbance units in an accelerated stability test such as that described below under the heading "Preparation for colorimetric analysis of the sample." Figure 1 reflects the results of an accelerated stability test for enoxaparin sodium.

In the description, the phrase "heparin product" means LMWHs and ULMWHs.

It is herein described that 4 to 10% by weight relative to the heparin of at least one permanganate chosen from potassium permanganate, sodium permanganate, and quaternary ammonium permanganate, such as potassium permanganate, is used for preparing heparins purified by oxidation. Approximately 8 % by weight relative to the heparin of potassium permanganate may be used in a process for preparing heparins purified by oxidation.

It is described herein that the process for preparing heparins purified by oxidation with at least one permanganate salt chosen from potassium permanganate, sodium permanganate, and quaternary ammonium permanganate, such as potassium permanganate, is performed at a temperature ranging from approximately 35°C to approximately 90°C. The process for preparing heparins purified by oxidation with potassium permanganate may be performed at a temperature from approximately 40°C to approximately 80°C.

At least one composition chosen from low glycoserine, glycoserine-free, and decolorized LMWHs and ULMWHs, exclusive of products approved by the USFDA as of the filing date of this application, is also described, said composition which can be obtained according to a process comprising the following steps:
a) purification of the heparin by the action of 4 to 10 % by weight relative to the heparin of at least one permanganate salt chosen from potassium permanganate, sodium permanganate, and quaternary ammonium permanganate, such as potassium permanganate, wherein oxidation occurs at a temperature ranging from approximately 35°C to approximately 90°C ;
b) depolymerization of the heparin; and
c) optionally, purification of the at least one composition.

It is described at least one composition chosen from low glycoserine, glycoserine-free, and decolorized LMWHs and ULMWHs, exclusive of products approved by the USFDA as of the filing date of this application, which can be obtained according to a process comprising depolymerizing heparin oxidized by the action of 4 to 10% by weight relative to the heparin of at least one permanganate salt chosen from potassium permanganate, sodium permanganate, and quaternary ammonium permanganate, wherein oxidation occurs at a temperature ranging from approximately 35°C to approximately 90°C.

Besides, a method for determining the glycoserine content of a sample of a heparin or a heparin product, including, but not limited to, LMWH and ULMWH and commercially available forms thereof, is also described, said method comprising:
a) treating a sample chosen from heparins and heparin products; and
b) thereafter, using a chromatography process for determining the presence of glycoserine residues in the sample.

The sample chosen from heparins and heparin products may be treated by depolymerization through the action of a heparinase before it is analyzed in the chromatography process. The sample chosen from heparins and heparin products may be depolymerized by the action of a mixture of heparinases. For instance, the mixture of heparinases may comprise heparinase 1 (EC 4.2.2.7.), heparinase 2 (heparin lyase II), and heparinase 3 (EC 4.2.2.8.). Anion-exchange chromatography (SAX - Strong Anionic Exchange) may be used for determining the presence (or absence) of glycoserine in the sample after the sample is treated. The stationary phase for anion-exchange chromatography may be grafted with quaternary ammonium derivatives, including, for example, -NMe3+. As used herein, the term "strong anion exchange chromatography" (SAX) encompasses anion exchange chromatography conducted on any resin that maintains a constant net positive charge in the range of about pH 2-12. Strong anion exchange chromatography may use a solid support functionalized with quaternary ammonium exchange groups. For example, columns such as Spherisorb® SAX (Waters Corp, Milford MA) may be used having particle size of about 5 µm, a column length of about 25 cm and a column diameter of between about 1 mm and about 4.6 mm may be used. CTA-SAX chromatography may be used, as desribed in the U.S. Patent Application entitled "Method for Determining Specific Groups Constituting Heparins or Low Molecular Weight Heparins" filed with the USPTO on even date herewith and hereby incorporated herein by reference solely for references to CTA-SAX chromatography. CTA-SAX chromatography is defined in said application as anion exchange chromatography conducted on a quaternary ammonium salt dynamically coated on a reversed phase silica column that maintains a constant net positive charge in the range of about pH 2 to about pH 12.

A method for quantifying the glycoserine content of a sample of a heparin or heparin product by analyzing the sample for glycoserine content is described herein. Analysis of the sample may include enzymatically digesting the sample and quantifying the content of the glycoserine residues in the digested sample by chromatography methods such as HPLC. CTA-SAX or SAX may be utilized to quantify the content of glycoserine residues. For example, and without limitation, the glycoserine content of the sample may be reduced below 2.0 % of the sample, below 0.3 % of the sample, or below 0.1 % of the sample. The glycoserine content of the sample may also be 0.0 % (i.e., undetectable).

It is described that in the method for determining the glycoserine content of a sample of a heparin or a heparin product, the mobile phase for the chromatography step is transparent to ultraviolet (UV) light in a range from about 200 nm to about 400 nm. The mobile phase may comprise, for example, sodium perchlorate, methanesulfonate salts, or phosphate salts. The method for determining the glycoserine post-treatment content of a sample chosen from heparins and heparin products, polysaccharides may be detected by their UV absorption following chromatography. The UV absorption of the polysaccharides may be measured at two wavelengths for example, 202 nm and 240 nm, following chromatography so that the absorption signals of non-acetylated polysaccharides cancel out.

A method for monitoring the glycoserine content of a sample of a heparin or a heparin product, is also described, said methodcomprising:
a) removing and/or diminishing glycoserine and/or oxidized glycoserine residues from the sample; and
b) analyzing the sample using a chromatography process to detect the presence or absence of glycoserine and/or oxidized glycoserine residues in the sample.

Removing and/or diminishing glycoserine and/or oxidized glycoserine residues may comprise
a) purification of the heparin by oxidation with about 4% to about 10% by weight relative to the heparin of at least one permanganate salt chosen from potassium permanganate, sodium permanganate, and quaternary ammonium permanganate, wherein oxidation occurs at a temperature ranging from approximately 35°C to approximately 90°C.; and
b) depolymerization of the oxidized heparin.

The glycoserine content of a sample chosen from heparins and heparin products may be quantified, for example, either by external calibration or internal calibration. Internal calibration can comprise the use of an internal standard such as 2-naphthol-3, 6-disulfonic acid. In another related embodiment, the solution to be assayed may contain about 0.15 g/l of 2-naphthol-3, 6-disulfonic acid.

A method of predicting the tendency of a heparin or a heparin product to colorize is also described, which comprises measuring the glycoserine content of said heparin or heparin product. The glycoserine content may be quantified by external or internal calibration. The internal calibration may comprise the use of an internal standard. The internal standard may be 2-naphthol-3, 6-disulfonic acid or about 0.15 g/l of 2-naphthol-3, 6 disulfonic acid.

The chromatography step may detect the tetrasaccharide of the glycoserine-linking domain of heparin molecules. The tetrasaccharide of the glycoserine-linking domain of heparin is:

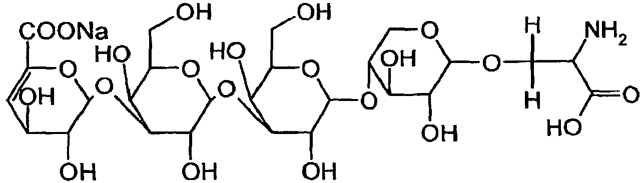

One skilled in the art will appreciate that this method and the aspects described herein may be used to determine the glycoserine content of LMWHs and ULMWHs known in the art, as well as those available commercially.

The accompanying drawings, which are incorporated in this specificationare described.
Figure 1 illustrates accelerated stability tests of non-permanganate treated and permanganate treated enoxaparin sodium, commercially available as described above.
Figure 2 is a chromatogram representative of a depolymerized heparin material.
Figure 3 is a UV spectrum illustrating a method for the selective detection of acetylated sugars.

The NMR of the tetrasaccharide GlcA-Gal-Gal-Xyl-Ser (peak n°1)shows a spectrum in D₂O, 50OMHz(δ in ppm) as follows: 3.30 (1H, t, 7Hz), 3.34 (1H, t, 8Hz), 3.55 (1H, t, 7Hz), 3.60 (1H, t, 7Hz), between 3.63 and 3.85 (10H, unresolved peak), 3.91 (2H, unresolved peak), 3.96 (1H. dd, 7 and 2Hz), between 4.02 and 4.10 (3H, unresolved peak), 4.12 (1H, d, 2Hz), 4,18 (1H, unresolved peak), 4.40 (1H, d, 6Hz), 4.46 (1H. d, 6Hz), 4.61 (1H. d, 6Hz), 5.29 (1H, d, 3Hz), 5.85 (1H, d, 3Hz).

The presence of glycoserine residues in preparations of heparin, LMWH, and ULMWH may cause quality and stability problems that decrease the commercial value of the product. For example, in enoxaparin stability tests, glycoserine residues increase the rate of coloration and may lead to product batches that are not within approved manufacturing specifications. See Figure 1. Controlling the amount of glycoserine in heparin makes it possible to better standardize the resulting commercial products, including LMWHs, and ULMWHs. As a consequence, the risk of producing product batches that cannot be sold may be decreased.

It has been described that the action of at least one of the permanganate salts mentioned herein, such as potassium permanganate, makes it possible to selectively cleave the glycoserine residue in the heparin chain. Moreover, the sites of action of permanganate, the mechanism of action of permanganate, and the structures resulting from permanganate action have been characterized.

Consequently, a glycoserine-free, decolorized heparin and a process for preparing glycoserine-free, decolorized heparin, are described, said process comprising the following steps:
a) treatment of the heparin with from about 4% to about 10% relative to the weight of the heparin of at least one permanganate chosen from potassium permanganate, sodium permanganate, and quaternary ammonium permanganate, such as potassium permanganate, at a temperature ranging from approximately 35°C to approximately 90°C according to the process as described above; and
b) purification of the glycoserine-free, decolorized heparin.

The temperature may range from about 40°C to about 80°C. In this range, 8 % relative to the weight of the heparin of permanganate treatment may maintain its effectiveness in eliminating glycoserine residues. And at permanganate concentrations equal to or greater than 4 % relative to the weight of the heparin of permanganate at a temperature of approximately 80°C, the described treatment may virtually eliminate detectable glycoserine residues. Below 4 % relative to the weight of the heparin of permanganate, the treatment may no longer be sufficient to eliminate glycoserine residues (as seen in example 9 below). In fact, the concentration of potassium permanganate used in the oxidation step is more important than temperature in reducing or eliminating glycoserine residues.

Heparin prepared as described above may in turn be used to prepare other glycoserine-free and decolorized heparin products, for example, fraxiparin, enoxaparin, fragmin, innohep (or logiparin), normiflo, embollex (or sandoparin), fluxum (or minidalton), clivarine and hibor.

A process for preparing decolorized enoxaparin from heparin is also described, said process comprising:
a) purification of the heparin by oxidation with about 4 % to about 10 % by weight relative to the heparin of at least one permanganate salt chosen from potassium permanganate, sodium permanganate, and quaternary ammonium permanganate, wherein oxidation occurs at a temperature ranging from approximately 35°C to approximately 90°C; and
b) depolymerization by a manufacturer other than one chosen from Aventis Pharma SA, its fully owned subsidiaries, and its successors and assigns, and agents of Aventis Pharma SA, its fully owned subsidiaries, and its successors and assigns, of the oxidized heparin according to a process to obtain said enoxaparin.

Additionally, a process for preparing decolorized enoxaparin is described, said process comprising:
depolymerization according to a process by a manufacturer other than one chosen from an Aventis company, its successors, and assigns, and agents of an Aventis company, its successors, and assigns, of heparin oxidized by about 4 % to about 10 % by weight relative to the heparin of at least one permanganate salt chosen from potassium permanganate, sodium permanganate, and quaternary ammonium permanganate, wherein oxidation occurs at a temperature ranging from approximately 35°C to approximately 90°C, to obtain said enoxaparin.

Additionally, heparin prepared as described above may in turn be used to prepare glycoserine-free, decolorized ULMWHs. Methods for preparing LMWH and ULMWH are disclosed, for example, in FR 2,440,376, U.S. Pat. No. 4,692,435, FR 2,453,875, Barrowcliffe, Thromb. Res. 12, 27-36 (1977), U.S. Pat. No. 4,401,758, EP 14184, EP 37319, EP 76279, EP 623629, FR 2,503,714, U.S. Pat. No. 4,804,652, WO 813276, EP 40144, U.S. Pat. No. 5,389,618, EP 287477, EP 347588, EP 380943, U.S. Pat. No. 4,533,549, U.S. Pat. No. 4,629,699, U.S. Pat. No. 4,791,195, U.S. Pat. No. 4,981,955, EP 380943, EP 347588, EP 64452, U.S. Pat. No. 4,396,762, EP 244235, EP 244236, U.S. Pat. No. 4,826,827, U.S. Pat. No. 3,766,167), EP 269981, U.S. Patent No. 4,303,651, U.S. Patent No. 4,757,057, and U.S. Published Patent Application No. 2002- 0055621 A1, all of which are incorporated herein for their disclosure of such methods, except that U.S. Pat. No. 5,389,618 is incorporated only as presently amended in the concurrent reissue proceeding.

Therefore, a glycoserine-free, decolorized LMWH and a process for preparing glycoserine-free, decolorized LMWH, exclusive of available LMWHs regulated by the USFDA as of the filing date of this application, is described, said process comprising the following steps:
a) treatment of the heparin with from about 4 % to about 10 % relative to the weight of the heparin of at least one permanganate chosen from potassium permanganate, sodium permanganate, and quaternary ammonium permanganate, such as potassium permanganate, at a temperature ranging from approximately 35°C to approximately 90°C according to the process as described above;
b) purification of the glycoserine-free, decolorized heparin; and
c) depolymerization of the glycoserine-free, decolorized heparin to produce said glycoserine-free, decolorized LMWH

The structure below shows the permanganate cleavage points in heparin, demonstrating the mechanism of action of potassium permanganate during oxidation of the heparin molecules:

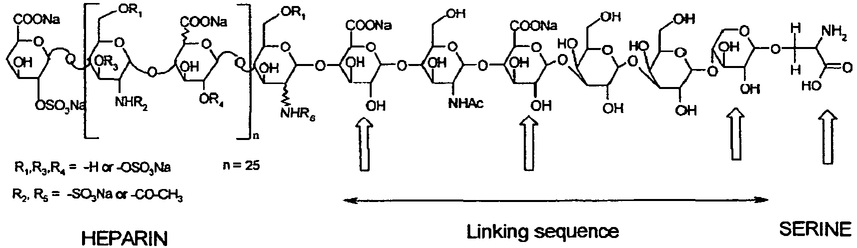

Without being limited to theory, it is believed that when heparin is treated according to the method as described above, the permanganate salt acts on the vicinal diols of glucuronic acid, making it possible to selectively eliminate the serine residues. Although potassium permanganate is much more selective, sodium periodate also cleaves heparin at these sites (See H. E. Conrad, Heparin-Binding Proteins, 130, Academic Press (1998)). However, in contrast to reactions with permanganate, the reaction of sodium periodate with heparin degrades the ATIII site and results in an undesirable loss of anticoagulant activity. *Id.*

Treatment with potassium permanganate as described above also degrades the glycoserine amino acid to an acid, thereby eliminating the source of a component required for the heparin coloration reactions (Maillard reactions). The action of permanganate on heparin according to a method as described above can be illustrated by the following reactions, which are not exhaustive:

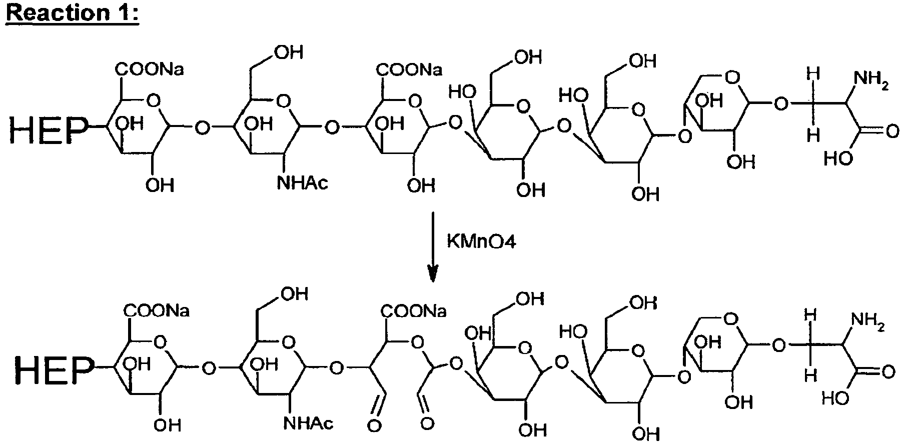

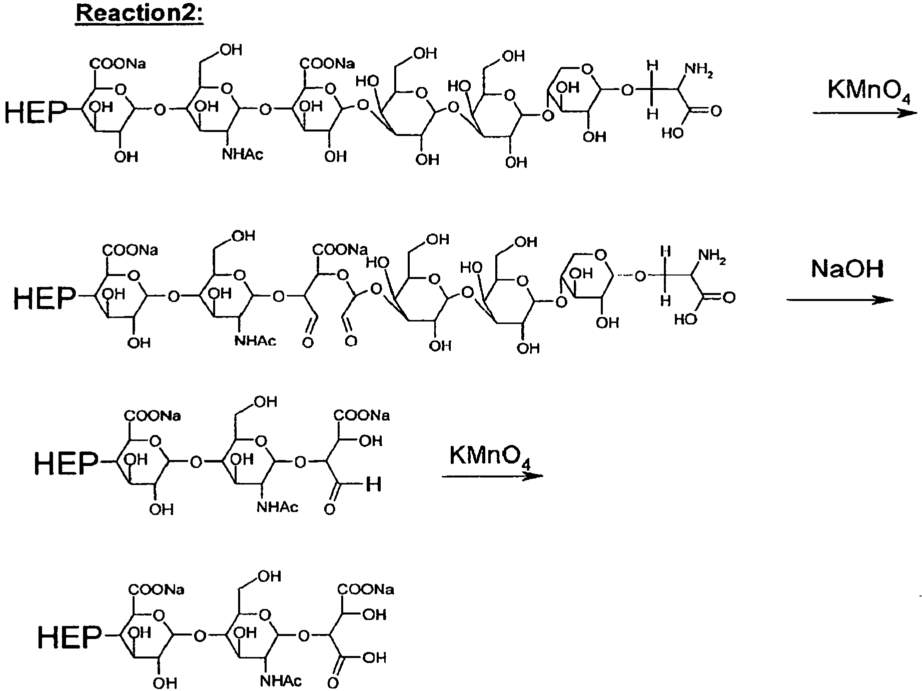

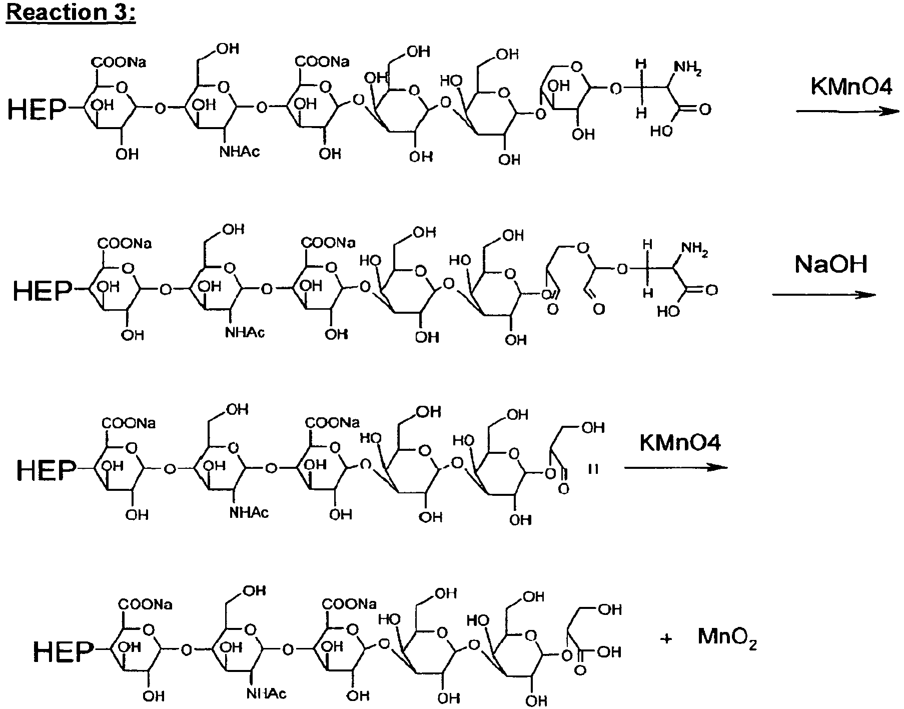

To identify the cleavage points, the general method is that heparin treated with, for example, potassium permanganate as described above is subjected to the action of heparinase III. This enzyme is highly specific for the non-sulfated regions of heparin. It selectively depolymerizes the disaccharide units containing uronic acid free of 2-O-sulfate and the domain for heparin binding to the protein (the protein that carries the heparin strands is a serine-glycine chain). Formation of the ΔIVa, ΔIVs disaccharides of the ΔlVa-Gal-Gal-Xyl-Ser component or of any oxidized derivative of this - linking region carrying the IVa disaccharide is mainly observed following digestion with heparinase III. This enzyme does not affect the remainder of the heparin chain. Consequently, the depolymerized material contains a mixture of heparin oligosaccharides (disaccharides to tetrasaccharides) and other polysaccharides. This mixture requires a pre-treatment to eliminate the heparin chains before it can be analyzed by High Performance Liquid Chromatography (HPLC). One skilled in the art will be familiar with a number of methods for eliminating heparin chains, including, for example, ultracentrifugation through a Millipore membrane (5 kDa) or methanol precipitation followed by centrifugation. The solution thus prepared can then be analyzed by HPLC. The following fragments can be identified by HPLC (porous graphite)/mass spectrometry coupling ("MM" means molecular mass):

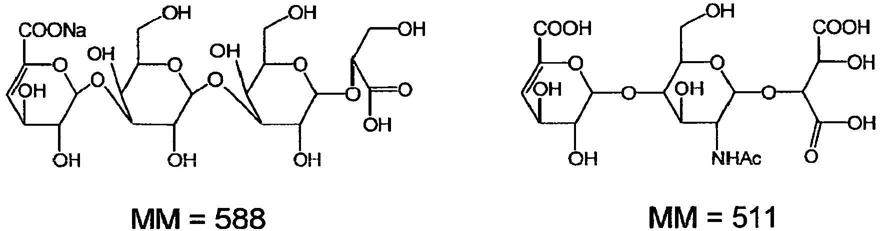

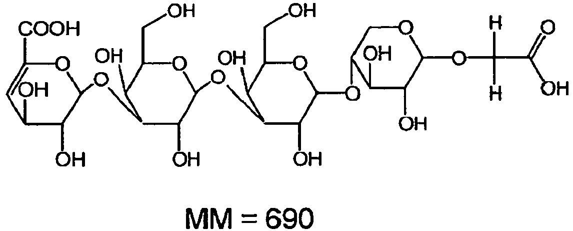

The structures of the tetrasaccharide MM=690 and of the trisaccharide MM=588 were confirmed by Nuclear Magnetic Resonance (NMR).

Those fragments demonstrate that treatment with potassium permanganate according to the invention selectively acts on the region of protein - linking and eliminates the serine residue. The compound MM=690 is the result of reaction 1 followed by enzyme digestion. The compound MM=511 is the result of reaction 2 followed by enzyme digestion. The compound MM=588 is the result of reaction 3 followed by enzyme digestion.

The present invention relates to a substantially pure compound having the formula: 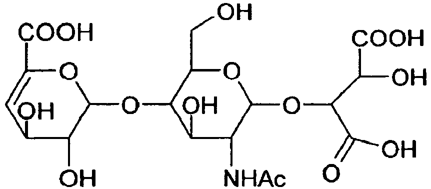 or

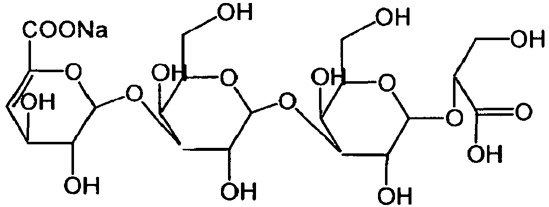

The foregoing compounds MM=511, MM=588 and MM=690 may be isolated and obtained in substantially pure form. As used herein, substantially pure" means sufficiently pure to identify the compounds by mass spectroscopy or NMR. In one embodiment, a substantially pure compound is one which is at least 80% pure. In another embodiment, a substantially pure compound is one which is at least 90% pure.

A method is described for determining the oligosaccharide content of a sample of a heparin or heparin product comprising depolymerizing the sample and analyzing the sample using a chromatography process to detect oligosaccharides chosen from MM=511, MM=588 and MM=690. The oligosachharide content may be quantified by external or internal calibration. It is described that the internal calibration comprises an internal standard, said internal standard may be a substantially pure compound selected from MM=511, MM=588 and MM=690.

For structural indentification, utilizing HPLC, the tetrasaccharide characteristic of the binding linking domain (glycoserine) may be isolated and identified by NMR (for example, a crude heparin can be selectively depolymerized by the action of heparinase III):

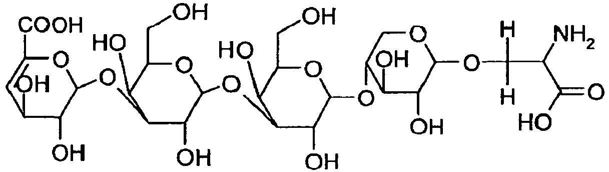

Yamada et al. has characterized this fragment by studying heparin depolymerization by heparinases in Yamada et al., J. Bioi. Chem. 270 (39): 22914 (1995); J. Biol. Chem. 267(3): 1528 (1992); Biochemistry, 38: 838 (1999). Hiromi Tsuda et al. (European Journal of Biochemistry, vol. 62, 1999, p. 127-133) concerns the study of structural modifications of the linker -HexA-HexNAc-GlcA-Gal-Gal-Xyl-Ser, bonding the glycosaminoglycan and the protein, using known oligosaccharides comprising a serine residue. US 4,496,550 concerns oligosaccharides comprising 4 to 8 monosaccharide units, which possess anticoagulant activity.

Because coloration problems potentially impact the shelf-life of heparin, LMWH, and ULMWH preparations, and therefore require quality control during the manufacturing process, a method for analyzing such preparations in order to detect and/or quantify the presence of glycoserine and its oxidized derivatives is also described. Said method may comprise the following steps:
a) depolymerization of the sample;
b) whether the sample is heparin or a heparin product, separation of the resulting oligosaccharides by HPLC; and
c) detection of oligosaccharides that contain glycoserine and/or its oxidized derivatives.

Depolymerization of the sample may be achieved through the action of a mixture of heparinases comprising, for example, heparinase 1 (EC 4.2.2.7.), heparinase 2 (heparin lyase 11), and heparinase 3 (EC 4.2.2.8.), which are available from Grampian Enzymes. The enzymatic depolymerization may be carried out over a period of hours, which can be determined by one skilled in the art, at an appropriate temperature, which can also be determined by one skilled in the art. For example, the enzymatic depolymerization may be carried out for 48 hours at ambient temperature by mixing 20 µl of an aqueous solution containing 20 mg/ml of the heparin to be assayed, and 100 µl of a 100 mM acetic acid/NaOH solution, at pH 7.0, containing 2 mM of calcium acetate and 2 mg/ml of BSA, with 20 µl of a stock solution of comprising a mixture of heparinase 1, heparinase 2, and heparinase 3, comprising 0.5 units/ml of each heparinase 1, 2, and 3. One skilled in the art can readily adapt these exemplary conditions to different amounts of substrate and enzyme.

It is also descrived that the various polysaccharides and oligosaccharides present in a depolymerized sample are separated and quantified using methods known to those skilled in the art. For example, polysaccharides and oligosaccharides comprising glycoserine and its oxidized derivatives may be separated by HPLC using anion-exchange chromatography, for example, with a stationary phase grafted with quaternary ammonium derivatives such as - NMe₃⁺. The chromatography column may be filled with any of a variety of available resins, for example, of the Spherisorb SAX type with particle sizes in the range for example of 5 to 10 um.

The apparatus used may be any chromatograph that allows the formation of an elution gradient and that can utilize a UV detector. The UV detector may be a diode array that can measure UV spectra for the constituents on at least two different wavelengths and record signals resulting from the difference between the absorbances at these different wavelengths. This allows specific detection of acetylated oligosaccharides. To allow this type of detection, mobile phases that are transparent to UV light up to 200 nm may be used. Exemplary mobile phases may be based on perchlorate, methanesulfonate, or phosphate salts. And the pH of the mobile phase for the separation may be from about 2.0 to about 6.5. The pH of the mobile phase may be about 3. As nonacetylated polysaccharides all have, at a given pH, quite a similar UV spectrum, it is possible to selectively detect acetylated sugars by taking, as the signal, the difference between the absorbance at two wavelengths chosen such that the absorptivity of the nonacetylated saccharides is cancelled out. Quantification of polysaccharides and oligosaccharides comprising glycoserine and its oxidized derivatives may be carried out using methods for external or internal calibration. It is described that the internal standard used is 2-naphthol-3, 6-disulfonic acid and that the aqueous solution of heparin to be assayed contains about 0.15 g/l of 2-naphthol-3, 6-disulfonic acid. The depolymerized sample may be assayed by chromatography according to the method described in patent FR 0211724 filed September 23, 2002, which is incorporated by reference herein, and illustrated below for its specific application to the method for assaying for glycoserine content.

By way of example, possible conditions for chromatographic separation according to thedescription are given below:
- 5 µm spherisorb SAX column, 25 cm in length, internal diameter 2.1 mm.
- Solvent A: 2.5 mM NaH₂PO₄ brought to pH 2.9 by addition of H₃PO₄.
- Solvent B: 1 N NaClO₄ - 2.5 mM NaH₂PO₄ brought to pH 3.0 by addition of H₃PO₄.

The elution gradient may be as follows:
- T=0 min: % B = 3;
- T= 40 min: % B = 60; and
- T = 60 min: % B = 80.

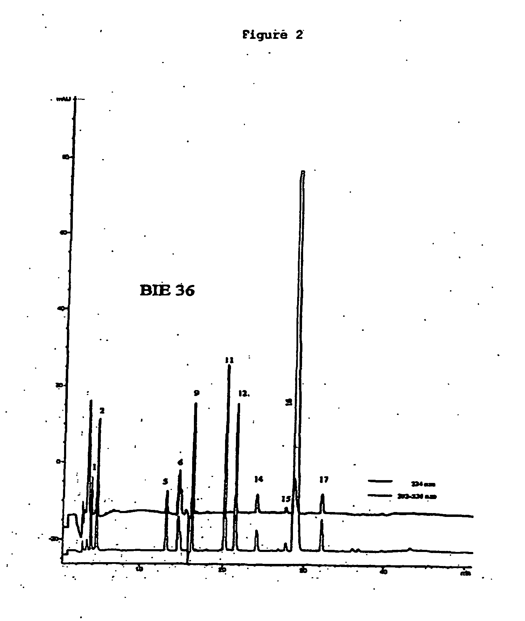

A chromatogram representative of the result of analyzing a depolymerized heparin material according to these exemplary conditions is shown in figure 2. The tetrasaccharide of the method of analysis as described above is:

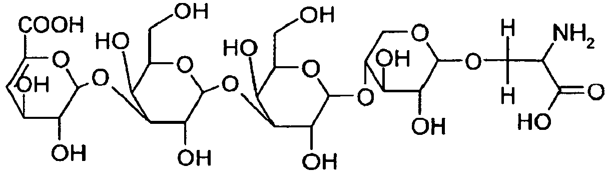

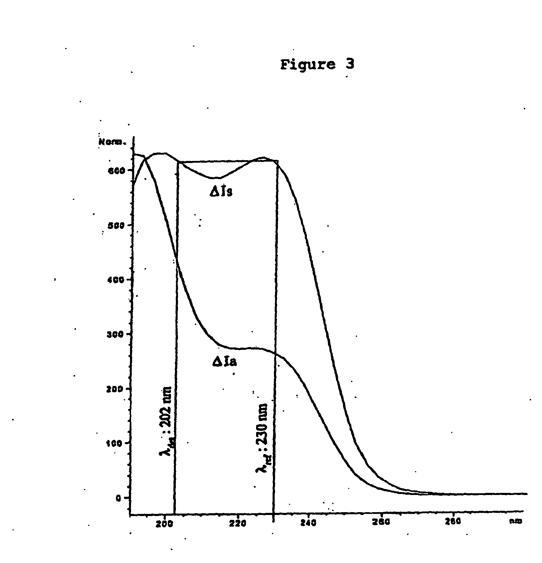

A method of detection utilized during chromatographic separation is also described herein. A method has been developed in order to increase the specificity of the UV detection. As shown in figure 3, 202 nm and 240 nm will be chosen as detection and reference wavelength and the 202 - 240 nm signal will be noted. A suitable detector for this technique is the DAD 1100 detector from the company Agilent Technologies. In this case, a double detection will be carried out, firstly, at 234 nm and, secondly at 202-240 nm. A method of analysis as defined above, using separation by anion-exchange chromatography, wherein the detection method makes it possible to selectively detect acetylated sugars, is described herein.

Besides, a method of analysis as defined above, using separation by exchange chromatography, wherein the selective detection of the acetylated sugars is carried out by taking, as the signal, the difference between the absorbance at two wavelengths chosen such that the absorptivity of the nonacetylated saccharides is cancelled out, is also described.

### Preparation for colorimetric analysis of the sample

A solution in water may be prepared so that the concentration is adjusted to 100 mg/ml, and the solution obtained is then filtered through a membrane filter with a porosity of 0.22 µm. The value of the absorbance at 400 nm is then measured. This measurement corresponds to the initial value for the study. The solution is distributed into seven bottles at a rate of approximately 5 ml per bottle. The samples are then set by being placed in an oven at 45°C. Each week, a bottle is taken out of the oven and the value of the absorbance at 400 nm is measured at 20°C. After 6 weeks, the suitability of the sample can be determined.

### Nomenclature of the saccharides and relation to the peaks according to the chromatogram in figure 2:

IdoA: α-L-idopyranosyluronic acid;
GlcA: β-D-glucopyranosyluronic acid;
ΔGlcA: 4,5-unsaturated acid: 4-deoxy-α-L-*threo*-hex-4-enepyranosyluronic acid;
Gal: D-galactose;
Xyl: xylose;
GlcNAc: 2-deoxy-2-acetamido-α-D-glucopyranose;
GlcNS: 2-deoxy-2-sulfamido-α-D-glucopyranose;
2S: 2-O-sulfate;
3S: 3-O-sulfate;.
6S: 6-O-sulfate;

1: ΔGlcAβ1-3 Galβ1-3 Galβ1-4 Xyl β1-O-Ser
2: (4-deoxy-α-L-threo-hexenepyranosyluronic acid)-(1→ 4)-2-deoxy-2-acetamido-α-D-glucopyranose, sodium salt;
5: (4-deoxy-α-L-threo-hexenepyranosyluronic acid)-(1→ 4)-2-deoxy-2-sulfamido-α-D-glucopyranose, disodium salt;
6: (4-deoxy-α-L-threo-hexenepyranosyluronic acid)-(1→4)-2-deoxy-2-acetamido-6-O-sulfo-α-D-glucopyranose, disodium salt;
9: (4-deoxy-2-O-sulfo-α-L-threo-hexenepyranosyluronic acid)-(1→ 4)-2-deoxy-2-acetamido-α-D-glucopyranose, disodium salt;
11: (4-deoxy-α-L-threo-hexenepyranosyluronic acid)-(1→ 4)-2-deoxy-2-sulfamido-6-O-sulfo-α-D-glucopyranose, trisodium salt;
12: (4-deoxy-2-O-sulfo-α-L-threo-hexenepyranosyluronic acid)-(1→ 4)-2-deoxy-2-sulfamido-α-D-glucopyranose, trisodium salt;
14: (4-deoxy-2-O-sulfo-α-L-threo-hexenepyranosyluronic acid)-(1→ 4)-2-deoxy-2-acetamido-6-O-sulfo-α-D-glucopyranose, trisodium salt;
15: (4-deoxy-α-L-threo-hexenepyranosyluronic acid)-(1→ 4)-2-deoxy-2-acetamido-6-O-sulfo-α-D-glucopyranosyl-(1→ 4)-(β-D-glucopyranosyluronic acid)-(1→ 4)-2-deoxy-2-sulfamido-3-O-sulfo-α-D-glucopyranose, pentasodium salt;
16: (4-deoxy-2-O-sulfo-α-L-threo-hexenepyranosyluronic acid)-(1→ 4)-2-deoxy-2-sulfamido-6-O-sulfo-α-D-glucopyranose, tetrasodium salt;
17: (4-deoxy-α-L-threo-hexenepyranosyluronic acid)-(1→ 4)-2-deoxy-2-acetamido-6-O-sulfo-α-D-glucopyranosyl-(1→ 4)-(β-D-glucopyranosyluronic acid)-(1→ 4)-2-deoxy-2-sulfamido-3,6-di-O-sulfo-α-D-glucopyranose, hexasodium salt.
Thus, the method as described above includes a method for pre-treating the sample before it is analyzed and the chromatography process used for determining the presence or absence of the tetrasaccharide characteristic of the linking domain.

### EXAMPLES

In the following examples the abbreviation "NI" means internal normalization. Examples 6-11 demonstrate the influence of temperature and potassium permanganate concentration on the elimination of glycoserine residues from heparin.

### EXAMPLE 1: Preparation of "Upgraded" Heparin

This process increases the anti-Xa activity of a crude heparin preparation and may be employed before using a heparin preparation in the process to remove glycoserine residues. The "upgraded" heparin prepared in this example was used in examples 2-10. And the initial anti-Xa activity of the crude heparin preparation used in this example is 150 IU/mg.

Five hundred and twenty milliliters of water and 112.5 g of NaCl (20% w/v) were introduced into a 2 L reactor. After dissolution, 60.0 g of crude heparin was added to the solution. After mechanical agitation for 30 minutes, the precipitate in suspension was filtered through a number 3 sintered glass funnel packed with 33.9 g of clarcel. The sintered glass filter was then rinsed with 120 ml of 20% (w/v) NaCl solution. The filtrate obtained (704 ml) was loaded into a 2 L reactor and methanol (388 ml) was rapidly poured in, in the presence of mechanical stirring. After stirring for approximately 2 hours at a temperature of about 20°C, the suspension was left to sediment overnight. The supernatant (804 ml) was removed and discarded and the sedimented precipitate was taken up in a 20 % NaCl solution (73.5 g of NaCl in 368 ml of water). After stirring for 30 minutes, 385 ml of methanol were rapidly added. After stirring for approximately 1 hour at a temperature of about 20°C, the suspension was left to sediment for approximately 12 hours. The supernatant (840 ml) was then removed and discarded and methanol (400 ml) was added to the sedimented precipitate. Again, after stirring for approximately 1 hour, the suspension was left to sediment for approximately 12 hours and the supernatant (430 ml) was removed and discarded. Methanol (400 ml) was added to the sedimented precipitate. After stirring this solution for 1 hour, the suspension was left to sediment for approximately 12 hours. After sedimentation, the suspended precipitate was filtered through a number 3 sintered glass funnel. The cake obtained was washed twice with 400 ml of methanol. The wet solid was filter-dried and then dried under reduced pressure (6 kPa), at a temperature of about 40°C. After drying, 43.7 g of "upgraded" heparin was obtained. The yield was 73 %.

Glycoserine residues are not affected by these treatments and the percentage of glycoserine in the sample (NI%) was 2.4.

### EXAMPLE 2: "Upgraded" Heparin Oxidized With Potassium Permanganate and Depyrogenated

Twelve grams of "upgraded" heparin obtained as described in example 1 and 120 ml of distilled water were introduced into a 250 ml Erlenmeyer flask. The temperature of the mixture was adjusted to 40°C with magnetic stirring. The pH of the mixture was adjusted to 8.7 ± 0.3 by adding 1N sodium hydroxide. The reaction medium was heated to 80°C and 0.96 g of solid KMnO₄ were added. After stirring for 15 minutes, the mixture was left to flocculate for 1 hour at 80°C. Carcel (1.2 g) was then added. After stirring for 15 minutes, the precipitate was collected by filtration through a number 3 sintered glass filter packed with 15 g of clarcel. The precipitate was washed with 25 ml of water at 60°C and then with 25 ml of water at 20°C. Then, the filtrate (180 ml) was placed in a 250 ml Erlenmeyer flask and 1.8 g NaCl was added to the filtrate in order to obtain a 1 % solution. The pH was adjusted to approximately 11.2 ± 0.3 by adding 1N sodium hydroxide. The reaction medium was heated at 45°C for 2 hours, and was then left to stir slowly at about 20°C for approximately 12 hours. This solution was filtered through a number 3 sintered glass funnel and the funnel was washed with 15 ml of 20 % (w/v) NaCl solution. The filtrate was placed in a 250 ml Erlenmeyer flask, and 1.2 ml of a 30 % aqueous hydrogen peroxide solution was added. The reaction medium was left to stir slowly at about 20°C for approximately 12 hours. The pH was adjusted to 6.2 ± 0.3 by adding a 6N HCl solution and the NaCl concentration was adjusted to 3%. This solution was filtered through a membrane with a porosity of 1 µm and the membrane was washed with 5 ml of water. The filtrate (204 ml) gathered from this filtration was placed in a 500 ml Erlenmeyer flask and methanol (163 ml) was added rapidly in the presence of magnetic stirring. After vigorous stirring for 30 minutes, the suspension was left to sediment for approximately 12 hours. The supernatant (295 ml) was then removed and discarded and methanol (70 ml) was added to the sedimented precipitate. After stirring for approximately 30 minutes, the suspension was left to sediment for 3 hours. Then supernatant (80 ml) was removed and discarded and methanol (60 ml) was added to the sedimented precipitate. After stirring for 30 minutes, the suspension was left to sediment for approximately 12 hours. The precipitate in suspension was filtered through a number 3 sintered glass funnel. The cake obtained from this filtration was washed with two portions of 25 ml of methanol. The wet solid was filter-dried and then dried under reduced pressure (6 kPa), at a temperature of about 40°C. After drying, 10.33 g of "purified" heparin were obtained. The yield obtained was 86.1 %.

The composition obtained had the following characteristics:
NI% Glycoserine = 0
Anti-Xa activity = 203.5 IU/mg

### EXAMPLE 3: "Upgraded" Heparin Without Oxidation and With Depyrogenation

Twelve grams of "upgraded" heparin obtained as described in example 1 and 120 ml of distilled water were introduced into a 250 ml Erlenmeyer flask. NaCl (1.21 g) was added in order to obtain a 1 % solution. The pH was adjusted to approximately 11.2 ± 0.3 by adding 1 N sodium hydroxide. The reaction medium was heated at 45°C for 2 hours, and was then left to stir slowly at a temperature of about 20°C for approximately 12 hours. The solution was filtered through a number 3 sintered glass funnel and the funnel was washed with 10 ml of 20 % (w/v) NaCl solution. The filtrate obtained was placed into a 250 ml Erlenmeyer flask, and 1.2 ml of a 30 % aqueous hydrogen peroxide solution were added. The reaction medium was stirred slowly at a temperature of about 20°C for 12 hours. The pH was adjusted to 6.2 ± 0.3 by adding a 6N HCl solution and the NaCl concentration was adjusted to 3 %. This solution was filtered through a membrane with a porosity of 1 µm. The filtrate (138 ml) was placed in a 250 ml Erlenmeyer flask and methanol (110 ml) was added rapidly in the presence magnetic stirring. After stirring for 30 minutes, the suspension was left to sediment for approximately 12 hours. The supernatant (195 ml) was then removed and discarded and methanol (55 ml) was added to the sedimented precipitate. After stirring for approximately 30 minutes, the suspension was left to sediment for approximately 1 hour. The supernatant (57 ml) was again removed and discarded. Methanol (55 ml) was added to the sedimented precipitate. After stirring for 30 minutes, the suspension was left to sediment for approximately 12 hours. The precipitate was then collected by filtration through a number 3 sintered glass funnel and the cake obtained was washed with 2 portions of 25 ml of methanol. The wet solid was filter-dried and then dried under reduced pressure (6 kPa), at a temperature of about 40°C. After drying, 11.12 g of "purified" heparin was obtained. The yield obtained was 92.7 %.

The composition obtained had the following characteristics:
NI% Glycoserine= 2.4
Anti-Xa activity= 203.7 IU/mg

### EXAMPLE 4 : "Upgraded" Heparin Without Oxidation and Without Depyrogenation

12 g of "upgraded" heparin obtained as described in example 1 and 120 ml of distilled water were introduced into a 250 ml Erlenmeyer flask. The pH was brought to approximately 11.2 ± 0.3 by adding 1N sodium hydroxide, and 1.2 ml of an aqueous hydrogen peroxide solution were added. The reaction medium was left to stir slowly at a temperature in the region of 20°C for 12 hours. The pH was brought back to 6.2 ± 0.3 by adding 6N HCl solution and the NaCl titer was adjusted to 3 %. This solution was filtered through a membrane with a porosity of 1 µm and was washed with 2 ml of water. The filtrate obtained (133 ml) was placed in a 500 ml Erlenmeyer flask and methanol (106 ml) was added rapidly thereto in the presence of magnetic stirring. After stirring for 30 minutes, the suspension was left to sediment until the following day. The supernatant was then removed and discarded (190 ml) and 50 ml of methanol were added to the sedimented precipitate. After stirring for approximately 30 minutes, the suspension was left to sediment for 4 hours. The supernatant was again removed and then discarded (48 ml) and 50 ml of methanol were added to the sedimented precipitate. After stirring for 30 minutes, the suspension was then left to sediment for approximately 12 hours. After sedimentation, the precipitate in suspension was filtered through a number 3 sintered glass funnel. The cake obtained was then washed with two portions of 25 ml of methanol. The wet solid was filter-dried and then dried under reduced pressure (6 kPa), at a temperature in the region of 40°C. After drying, 10.48 g of "purified" heparin were obtained. The yield obtained was 87.35 %.

The composition obtained had the following characteristics:
Nl% Glycoserine = 2.4
Anti-Xa activity= 209.5 IU/mg

### EXAMPLE 5: "Upgraded" Heparin With Oxidation and Without Depyrogenation

12 g of "upgraded" heparin obtained according to example 1 and 120 ml of distilled water were introduced into a 250 ml Erlenmeyer flask. The mixture was brought to 40°C in the presence of magnetic stirring. The pH was brought to 8.7 ± 0.3 by adding 1N sodium hydroxide. The reaction medium was heated to about 80°C and 0.96 g of solid KMnO₄ were added to the reaction medium. After stirring for 15 minutes, the mixture was left to flocculate for 1 hour at 80°C. 1.2 g of clarcel was then added. After stirring for 15 minutes, the precipitate in suspension was filtered through a number 3 sintered glass funnel packed with 15 g of clarcel. This was successively washed with 25 ml of water at 60°C and then with 25 ml of water at 20°C. The filtrate (178 ml) was placed in a 250 ml Erlenmeyer flask and 1.2 ml of a 30% aqueous hydrogen peroxide solution was added thereto. The reaction mixture was left to stir slowly at a temperature in the region of 20°C for 12 hours. The pH was brought back to 6.2 ± 0.3 by adding a 6N HCl solution and the NaCl titer was adjusted to 3 %. This solution was then filtered through a membrane with a porosity of 1 µm and washed with 2 ml of water. The filtrate obtained (192 ml) was placed in a 500 ml Erlenmeyer flask and 154 ml of methanol were rapidly added thereto, in the presence of magnetic stirring. After stirring for 30 minutes, the suspension was left to sediment until the following day. The supernatant was then removed and discarded (283 ml) and 60 ml of methanol were added to the precipitated sediment. After stirring for approximately 30 minutes, the suspension was left to sediment for 4 hours. The supernatant was again removed and discarded (58 ml) and another 60 ml of methanol were added to the sedimented precipitate. After stirring for 30 minutes, the suspension was left to sediment for approximately 12 hours. The precipitate in suspension was filtered through a number 3 sintered glass funnel. The cake obtained was then washed with two portions of 25 ml of methanol. The wet solid was filter-dried and then dried under reduced pressure (6 kPa), at a temperature in the region of 40°C. After drying, 10.31 g of "purified" heparin were obtained. The yield obtained was 85.9%.

The composition obtained had the following characteristics:
Nl% Glycoserine= 0
Anti-Xa activity = 210.3 IU/mg

### EXAMPLE 6: "Upgraded" Heparin Oxidized in 8% KMnO₄ at 80°C

10 g of "upgraded" heparin obtained according to example 1 and 100 ml of distilled water were introduced into a 250 ml Erlenmeyer flask. The mixture was brought to 40°C in the presence of magnetic stirring. The pH was brought to 8.7 ± 0.3 by adding 1N sodium hydroxide. The reaction medium was heated to 80°C and 0.80 g of solid KMnO4 were added to it. After stirring for 15 minutes, the mixture was left to flocculate for 1 hour at 80°C. 1.0 g of clarcel was then added. After stirring for 15 minutes the precipitate in suspension was filtered through a number 3 sintered glass funnel packed with 15 g of clarcel. This was successively washed with 25 ml of water at 60°C and then with 25 ml of water at 20°C. The filtrate obtained (152 ml) was placed in a 250 ml Erlenmeyer flask and 1.5 g of NaCl were added thereto in order to obtain a 1 % solution. The pH was brought to approximately 11 ± 0.3 by adding 1N sodium hydroxide. The reaction medium was heated to approximately 45°C for 2 hours, and was then left to stir slowly at a temperature in the region of 20°C for 12 hours. The solution was filtered through a number 3 sintered glass funnel. The filtrate obtained was introduced into a 250 ml Erlenmeyer flask, and 1.0 ml of a 30 % aqueous hydrogen peroxide solution were added thereto. The reaction medium was left to stir slowly at a temperature in the region of 20°C for 12 hours. The pH was brought back to 6.2 t 0.3 with a 6N HCl solution and the NaCl titer was adjusted to 3 %. This solution was filtered through a membrane with a porosity of 1 µm and half the filtrate (70 ml) was placed in a 250 ml Erlenmeyer flask and 56 ml of methanol were added rapidly thereto, in the presence of magnetic stirring. After stirring for 30 minutes, the mixture was left to sediment. The supernatant was removed and then discarded (118 ml) and 60 ml of methanol were added to the sedimented precipitate. After stirring for 30 minutes, the suspension was left to sediment for approximately 12 hours. The supernatant was then removed and discarded (54 ml) and 50 ml of Methanol were added to the sedimented precipitate. After stirring for approximately 30 minutes, the suspension was left to sediment for approximately 12 hours. The precipitate in suspension was filtered through a number 3 sintered glass funnel. The cake obtained was then washed with two portions of 25 ml of methanol. The wet solid was filter-dried and then dried under reduced pressure (6kPa), at a temperature in the region of 40°C. After drying, 2.80 g of "purified" heparin were obtained. The yield obtained was 63.3 %.

The composition obtained had the following characteristics:
NI% Glycoserine = 0.0

### EXAMPLE 7: "Upgraded" Heparin Oxidized in 4% KMnO₄ at 80°C

10 g of "upgraded" heparin obtained according to example 1 and 100 ml of distilled water were introduced into a 250 ml Erlenmeyer flask. The mixture was brought to 40°C in the presence of magnetic stirring. The pH was brought to 8.7 ± 0.3 by adding 1N sodium hydroxide. The reaction medium was heated to 80°C and 0.40 g of solid KMnO4 were added thereto. After stirring for 15 minutes, the mixture was left to flocculate for 1 hour at 80°C. 1.0 g of clarcel was added thereto. After stirring for 15 minutes, the precipitate in suspension was filtered through a number 3 sintered glass funnel packed with 15 g of clarcel. This was successively washed with 25 ml of water at 60°C and then with 25 ml of water at 20°C. The filtrate obtained (158 ml) was placed in a 250 ml Erlenmeyer flask and 1.6 g of NaCl were added thereto in order to obtain a 1 % solution. The pH was brought to approximately 11 ± 0.3 by adding 1 N sodium hydroxide. The reaction medium was heated to 45°C for 2 hours, and was then left to stir slowly at a temperature in the region of 20°C for 12 hours. The solution was filtered through a number 3 sintered glass funnel. The filtrate was again introduced into a 250 ml Erlenmeyer flask, and 1.0 ml of a 30 % aqueous hydrogen peroxide solution was added. The reaction medium was left to stir slowly at a temperature in the region of 20°C for 12 hours. The pH was brought back to 6.2 ± 0.3 with a 6N HCl solution and the NaCl titer was adjusted to 3 %. This solution was filtered through a membrane with a porosity of 1 µm. The filtrate (152 ml) was placed in a 500 ml Erlenmeyer flask and 122 ml of methanol were added rapidly thereto, in the presence of magnetic stirring. The supernatant was removed and discarded (251 ml) and 100 ml of methanol were added to the sedimented precipitate. After stirring for 30 minutes, the suspension was left to sediment for approximately 12 hours. The supernatant was then removed and discarded (97 ml) and 100 ml of methanol were added to the sedimented precipitate. After stirring for approximately 30 minutes, the suspension was left to sediment for approximately 12 hours. The precipitate in suspension was filtered through a number 3 sintered glass funnel. The cake obtained was then washed with two portions of 30 ml of methanol. The wet solid was filter dried and then dried under reduced pressure (6 kPa), at a temperature in the region of 40°C. After drying, 6.4 g of "purified" heparin were obtained. The yield obtained was 71 %.

The composition obtained had the following characteristics:
NI% Glycoserine = 0.0

### EXAMPLE 8: "Upgraded" Heparin Oxidized in 8 % of KMnO4 at 40°C

10 g of "upgraded" heparin obtained according to example 1 and 100 ml of distilled water were introduced into a 250 ml Erlenmeyer flask. The mixture was brought to 40°C in the presence of magnetic stirring. The pH was brought to 8.7 ± 0.3 by adding 1N sodium hydroxide. The reaction medium was then heated to 40°C and 0.80 g of solid KMn04 were added thereto. After stirring for 15 minutes, the mixture was left to flocculate for 1 hour at 80°C. 1.0 g of clarcel was added thereto. After stirring for 15 minutes, the precipitate in suspension was filtered through a number 3 sintered glass funnel packed with 15 g of clarcel. This was sequentially rinsed with 25 ml of water at 60°C and then 25 ml of water at 20°C. The filtrate obtained (142 ml) was placed in a 250 ml Erlenmeyer flask and 1.42 g of NaCl were added in order to obtain a 1 % solution. The pH was brought to approximately 11 ±0.3 by adding 1N sodium hydroxide. The reaction medium was heated at 45°C for 2 hours, and then left to stir slowly at a temperature in the region of 20°C for 12 hours. The solution was then filtered through a number 3 sintered glass funnel. The filtrate was again introduced into a 250 ml Erlenmeyer flask, and 1.0 ml of a 30 % aqueous hydrogen peroxide solution was added. The reaction medium was left to stir slowly at a temperature in the region of 20°C for 12 hours. The pH was brought back to 6.2 ± 0.3 with a 6N HCl solution and the NaCl titer was adjusted to 3 %. This solution was filtered through a membrane with a porosity of 1 µm and half the filtrate (80 ml) was placed in a 250 ml Erlenmeyer flask. 64 ml of methanol were added rapidly thereto, in the presence of magnetic stirring. After stirring for approximately 30 minutes, the suspension was left to sediment. The supernatant was removed and then discarded (131 ml) and 60 ml of methanol were added to the sedimented precipitate. After stirring for approximately 30 minutes, the suspension was left to sediment for approximately 12 hours. The supernatant was then removed and discarded (52 ml) and 50 ml of methanol were added to the sedimented precipitate. The suspension was filtered through a number 3 sintered glass funnel. The cake obtained was then washed with two portions of 25 ml of methanol. The wet solid was filter-dried and then dried under reduced pressure (6 kPa), at a temperature in the region of 40°C. After drying, 2.3 g of "purified" heparin were obtained. The yield obtained was 54 %.

The composition obtained had the following characteristics:
**NI%** Glycoserine=0.0

### EXAMPLE 9: "Uparaded" Heparin Oxidized With 8% KMnO4 at 60°C

10 g of "upgraded" heparin obtained according to example 1 and 100 ml of distilled water were introduced into a 250 ml Erlenmeyer flask. The mixture was brought to 40°C with magnetic stirring. The pH was brought to 8.7 ± 0.3 by adding 1N sodium hydroxide. The reaction medium was heated to 60°C and 0.80 g of solid KMn04 were added thereto. After stirring for 15 minutes, the mixture was left to flocculate for 1 hour at 80°C. 1.0 g of clarcel was then added. After stirring for 15 minutes, the precipitate in suspension was filtered through a sintered glass funnel 3 packed with 15 g of clarcel. This was then rinsed with 25 ml of water at 60°C and then 25 ml of water at 20°C. The filtrate obtained (150 ml) was placed in a 250 ml Erlenmeyer flask. 1.5 g of NaCl were added in order to obtain a 1 % solution. The pH was brought to approximately 11 ± 0.3 by adding 1 N sodium hydroxide. The reaction medium was heated at 45°C for 2 hours, and was then left to stir slowly at a temperature in the region of 20°C for 12 hours. The solution was filtered through a number 3 sintered glass funnel. The filtrate was again introduced into a 250 ml Erlenmeyer flask, and 1.0 ml of a 30 % aqueous oxygen peroxide solution was added. The reaction medium was left to stir slowly at a temperature in the region of 20°C for 12 hours. The pH was brought back to 6.2 ± 0.3 with a 6N HCl solution and the NaCl titer was adjusted to 3 %. This solution was filtered through a membrane with a porosity of 1 µm and half the filtrate (70 ml) was placed in a 250 ml Erlenmeyer flask. 56 ml of methanol were added rapidly thereto, in the presence of magnetic stirring. The supernatant was then removed and discarded (118 ml) and 60 ml of methanol were added to the sedimented precipitate. After stirring for approximately 30 minutes, the mixture was left to sediment for approximately 12 hours. The supernatant was then removed and discarded (54 ml) and 50 ml of methanol were added to the sedimented precipitate. The suspension was filtered through a number 3 sintered glass funnel. The cake obtained was then washed with two portions of 25 ml of methanol. The wet solid was filter-dried and then dried under reduced pressure (6 kPa), at a temperature in the region of 40°C. After drying, 3.12 g of "purified" heparin were obtained. The yield obtained was 68 %.

The composition obtained had the following characteristics:
NI% Glycoserine = 0.0

### EXAMPLE 10: "Upgraded" Heparin Oxidized in 2% KMnO4 at 80°C

10 g of "upgraded" heparin obtained above and 100 ml of distilled water were introduced into a 250 ml Erlenmeyer flask. The mixture was brought to 40°C in the presence of magnetic stirring. The pH was brought to 8.7 ± 0.3 by adding 1 N sodium hydroxide. The reaction medium was heated to 80°C and 0.16 g of solid KMn04 were added thereto. After stirring for 15 minutes, the mixture was left to flocculate for 1 hour at 80°C. 1.0 g of clarcel was then added. After stirring for 15 minutes, the precipitate in suspension was filtered through a number 3 sintered glass funnel packed with 15 g of clarcel. This was then rinsed with 25 ml of water at 40°C and then 25 ml of water at 20°C. The filtrate (114 ml) was placed in a 250 ml Erlenmeyer flask. 1.14 g of NaCl were added in order to obtain a 1 % solution. The pH was brought to approximately 11 ± 0.3 by adding 1 N sodium hydroxide. The reaction medium was heated at 45°C for 2 hours, and was then left to stir slowly at a temperature in the region of 20°C for 12 hours. The solution was filtered through a number 3 sintered glass funnel. The filtrate was again introduced into a 250 ml Erlenmeyer flask, and 0.8 ml of a 30 % aqueous hydrogen peroxide solution was added. The reaction medium was left to stir slowly at a temperature in the region of 20°C for 12 hours. The pH was brought back to 6.2 ± 0.3 with a 6N HCl solution and the NaCl titer was adjusted to 3 %. This solution was filtered through a membrane with a porosity of 1 µm and half the filtrate (75 ml) was placed in a 250 ml Erlenmeyer flask. 60 ml of methanol were added rapidly, in the presence of magnetic stirring. After stirring for approximately 30 minutes, the mixture was left to sediment. The supernatant was removed and then discarded (120 ml) and 50 ml of methanol are added to the sedimented precipitate. After stirring for approximately 30 minutes, the mixture was left to sediment. The supernatant was then removed and discarded (38 ml) and 40 ml of methanol were added to the sedimented precipitate. After stirring for approximately 30 minutes, the suspension was left to sediment. The supernatant was then removed and discarded (27 ml) and 30 ml of methanol were added to the sedimented precipitate. The suspension was filtered through a number 3 sintered glass funnel. The cake obtained was then washed with two portions of 25 ml of methanol. The wet solid was filter-dried and then dried under reduced pressure (6 kPa) at a temperature in the region of 40°C. After drying, 2.61 g of "purified" heparin were obtained. The yield obtained was 72 %.

The composition obtained had the following characteristics:
NI% Glycoserine= 0.8

### EXAMPLE 11: "Upgraded" Heparin Oxidized in 2% KMnO4 at 60°C

10 g of "upgraded" heparin obtained according to example 1 and 100 ml of distilled water were introduced into a 250 ml Erlenmeyer flask. The mixture was brought to 40°C in the presence of magnetic stirring. The pH was brought to 8.7 ± 0.3 by adding 1 N sodium hydroxide. The reaction medium was heated to 60°C and 0.16 g of solid KMn04 were added thereto. After stirring for 15 minutes, the mixture was left to flocculate for 1 hour at 60°C. 1.0 g of clarcel was then added. After stirring for 15 minutes, the precipitate in suspension was filtered through a number 3 sintered glass funnel packed with 15 g of clarcel. This was then rinsed with two portions of 20 ml of water at 40°C. The filtrate (129 ml) was placed in a 250 ml Erlenmeyer flask. 1.29 g of NaCl were added thereto in order to obtain a 1 % solution. The pH was brought to approximately 11 ± 0.3 by adding 1N sodium hydroxide. The reaction medium was heated at 45°C for 2 hours, and was then left to stir slowly at a temperature in the region of 20°C for 12 hours. The solution was filtered through a number 3 sintered glass funnel. The filtrate was again introduced into a 250 ml Erlenmeyer flask, and 0.8 ml of a 30 % aqueous hydrogen peroxide solution was added. The reaction medium was left to stir slowly at a temperature in the region of 20°C for 12 hours. The pH was brought back to 6.2 ± 0.3 with a 6N HCl solution and the NaCl titer was adjusted to 3 %. This solution was filtered through a membrane with a porosity of 1 µm and half the filtrate (75 ml) was placed in a 250 ml Erlenmeyer flask. 60 ml of methanol were added rapidly thereto, in the presence of magnetic stirring. The supernatant was removed and then discarded (120 ml) and 50 ml of methanol were added to the sedimented precipitate. After stirring for approximately 30 minutes, the mixture was left to sediment. The supernatant was then removed and then discarded (32 ml) and 30 ml of methanol were added to the sedimented precipitate. After stirring for approximately 30 minutes, the mixture was left to sediment. The supernatant was then removed and discarded (26 ml) and 30 ml of methanol were added to the sedimented precipitate. The suspension is filtered through a number 3 sintered glass funnel. The cake obtained was then washed with two times 25 ml of methanol. The wet solid was filter-dried and then dried under reduced pressure (6 kPa), at a temperature in the region of 40°C. After drying, 2.24 g of "purified" heparin were obtained. The yield obtained was 62 %.

The composition obtained had the following characteristics:
**NI**% Glycoserine= 0.9

**Table 1: Anti-Xa Activity of the Heparins Obtained With or Without Treatment With KmnO₄**

| ***Assay*** | ***Yield*** | ***aXa IU*/*mg*** | ***aXa USP*/*mg*** | ***Comments*** |
|---|---|---|---|---|
| Example 2 | 86.1 % | 203.5 | 190.5 | KMnO₄ treatment: yes |
| | | | | Depyrogenation: yes |
| Example 3 | 92.7 % | 203.7 | 186.8 | KMnO₄ treatment: no |
| | | | | Depyrogenation: yes |
| Example 4 | 87.3 % | 209.5 | 191 | KMnO₄ treatment: no |
| | | | | Depyrogenation: no |
| Example 5 | 85.9 % | 210.3 | 176.2 | KMnO₄ treatment: yes |
| | | | | Depyrogenation: no |

## Claims

1. A substantially pure compound having the formula: 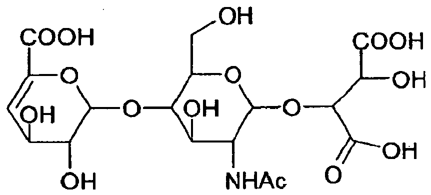 or

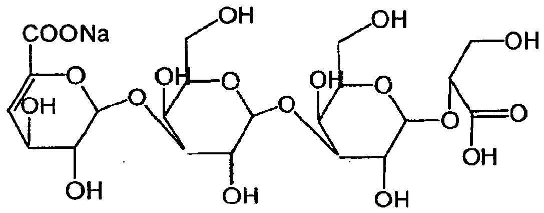

## Patentansprüche

1. Im Wesentlichen reine Verbindung der Formel: 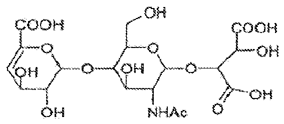 oder

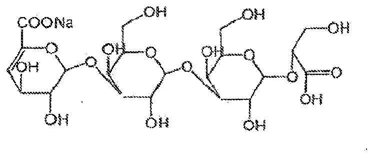

## Revendications

1. Composé sensiblement pur ayant la formule 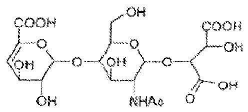 ou
